# EUROPÄISCHE PATENTSCHRIFT

(11) **EP 2 277 247 B1**
(45) Veröffentlichungstag und Bekanntmachung des Hinweises auf die Patenterteilung: **16.04.2014**
(21) Anmeldenummer: 09745667.7
(22) Anmeldetag: 05.05.2009
(51) Int. Cl.: H02B 1/50

(54) **VERBINDUNGSANORDNUNG FÜR AUF EINEM SOCKEL POSITIONIERTE SCHRANKFÖRMIGE, VORGEFERTIGTE MODULARTIGE AUFSATZTEILE**
CONNECTION ARRANGEMENT FOR CUBICLE-LIKE, PRE-MANUFACTURED MODULAR ATTACHMENTS POSITIONED ON A SOCKET
DISPOSITIF DE CONNEXION POUR DES ÉLÉMENTS RAPPORTÉS MODULAIRES PRÉFABRIQUÉS, EN FORME D'ARMOIRE, DISPOSÉS SUR UN SOCLE

(30) Priorität: 14.05.2008 DE 102008023449
(43) Veröffentlichungstag der Anmeldung: 26.01.2011
(73) Patentinhaber: GSAB Elektrotechnik GmbH, 99718 Greußen (DE)
(72) Erfinder: VONNOE, Hartmut, 99718 Trebra (DE)
(74) Vertreter: Kruspig, Volkmar
(86) Internationale Anmeldenummer: PCT/EP2009/055376
(87) Internationale Veröffentlichungsnummer: WO 2009/138334

(56) Entgegenhaltungen:
- EP-A- 0 189 061
- US-A- 4 123 129
- US-A- 4 974 386
- US-B1- 6 312 068

## Beschreibung

Die Erfindung betrifft eine Verbindungsanordnung für auf einem Sockel positionierte schrankförmige, vorgefertigte modulartige Aufsatzteile, insbesondere Schaltschränke, Niederspannungsverteiler, Kabelverteiler, elektrische Anschlusssäulen oder dergleichen Einrichtungen, wobei der Sockel und das Aufsatzteil an ihren montageseitig gegenüberliegenden Seitenflächen einen Flansch oder eine zum Innenraum orientierte Kragung aufweisen, gemäß Oberbegriff des Patentanspruchs 1.

Niederspannungsverteiler, Kabelverteiler bzw. Anschlusssäulen, die üblicherweise aus einem glasfaserverstärkten Polyestermaterial bestehen, umfassen ein Erdstück oder einen Sockel, auf den ein Schrankteil montiert wird. Das Schrankteil besteht aus einem dachseits, an den Seitenwänden und an der Rückwand geschlossenen Gehäuse. Vorderseitig sind Türen oder eine Frontplatte einsetz- bzw. einhängbar.

Die Verbindung zwischen diesem Gehäuse mit dem Sockel oder dem Erdstück erfolgte bisher durch vorgesehene abgestufte Flanschflächen, die, mit einem zusätzlichen Bandstahl oder Flachstahl versehen, mittels Schrauben realisiert wird.

Derartig bekannte Flanschverbindungen sind in mehrerer Hinsicht montageunfreundlich.

Zum einen muss das Aufsetzen des Schrankoberteils sehr exakt erfolgen. Hierbei besteht die Gefahr, dass unter Missachtung von Arbeitsschutzbedingungen es zu Quetschverletzungen des bei der Montage beschäftigten Personals kommt. Da die Schränke unterschiedlichste Ausbauten enthalten können, variiert das Schrankgewicht zwischen 35 kg und 80 oder mehr kg. In den Fällen, wo beispielsweise Steuerungen für die Straßenbeleuchtung mit entsprechenden Transformatoren vorgesehen sind, kann das Schrankgewicht auch mehr als 100 kg betragen.

Nachdem der Schrank des Standes der Technik aufgesetzt wurde, sind die vorerwähnten Bandstahlstücke oder Knotenbleche einzusetzen und mehrere Schraubverbindungen herzustellen. Bei einem mit Lastschaltleisten versehenen Schrank kann das notwendige Werkzeug zum Anziehen der Schrauben nur schwer an den Sechskantköpfen aufgesetzt werden. Darüber hinaus reicht die geschraubte Flanschverbindung in den Innenraum hinein, was die Aufnahme von größeren Bauteilen erschwert oder einschränkt. Wird beispielsweise aus Bequemlichkeitsgründen auf die Verwendung eines zusätzlichen, verstärkenden Bandstahls verzichtet, kann durch die punktförmige Schraubverbindung bei Kippbelastungen ein Herausbrechen des Flansches die Folge sein.

Aus dem deutschen Gebrauchsmuster DE 29510649 U1 ist es vorbekannt, an einem an sich einstückigen Verteilerschrank eine Sollbruchstelle in Form einer Nut vorzusehen. Diese Nut soll sich oberhalb der Oberkante des Erdreiches befinden und außen umlaufend ausgeführt sein. An den Innenseiten des Verteilergehäuses und des Sockelteiles sind ergänzend korrespondierende Verbindungseinrichtungen angeformt. Kommt es zu einer Beschädigung des Verteilerschrankes, dann findet ein Bruch entlang der Nut statt. Mit dem Wegbrechen kann der beschädigte Verteilerschrank ausgetauscht werden. Ein Verteilerschrank mit Sollbruchstelle weist jedoch nicht die geforderte und normgerechte Festigkeit auf.

Aus der US 4974 386 ist eine als Schienenstücke Verbindungsanordnung bekannt. Aus dem Vorgenannten ist es daher Aufgabe der Erfindung, eine weiterentwickelte Verbindungsanordnung für auf einem Sockel positionierte schrankförmige, vorgefertigte modulartige Aufsatzteile, insbesondere Schaltschränke oder dergleichen Einrichtungen anzugeben, welche quasi werkzeugfrei ausgeführt werden kann und die eine hohe Stabilität auch gegenüber unter einem Winkel angreifenden Kräften ermöglicht. Darüber hinaus soll die Verbindungsanordnung montagefreundlich gestaltet werden, und zwar auf der Grundlage einer Selbstzentrierung beim Aufsetzen des Schrankteils auf ein Erdstück oder einen entsprechenden Sockel.

Die Lösung der Aufgabe der Erfindung erfolgt durch eine Verbindungsanordnung gemäß der Merkmalskombination des Patentanspruchs 1, wobei die Unteransprüche mindestens zweckmäßige Ausgestaltungen und Weiterbildungen umfassen.

Erfindungsgemäß erfolgt beim Aufsetzen des Schrankoberteils auf den bauseits vorhandenen oder bereits fixierten Sockel die Positionierung über Justier-Keilschrägflächen, die an den Seitenwänden und der Rückwand ausgebildet sind, so dass das Aufsatzteil in die korrekte Position beim Absenken auf den Sockel gleiten kann.

Ergänzend sind im Innenbereich der Auflage- oder Flanschfläche des Schranks zum Sockel Zentriernasen, die eine Verschiebung des Aufsatzteils insbesondere nach hinten verhindern.

Erfindungsgemäß weist der weitergebildete Flansch oder die entsprechend ausgeführte Kragung, die sowohl am Sockel als auch am Aufsatzteil vorhanden ist, eine Profilierung auf, wobei zur form- und kraftschlüssigen Verbindung zwischen Sockel und Aufsatzteil Klammern oder Schienenstücke vorgesehen sind, welche eine zur Profilierung komplementäre Form besitzen.

Zur Montage wird dann das jeweilige Schienenstück bzw. die betreffende Klammer auf die Profilierung aufgeschoben und dort durch entweder eine Federklemmwirkung oder durch eine vorgesehene Konizität gesichert.

Bei einer bevorzugten Ausgestaltung der Erfindung weist die Profilierung eine Querschnittsfläche in der Gestalt eines in Längsrichtung geschnittenen hälftigen T auf, wobei sich nach dem Aufsetzen des Schrankteils auf den Sockel eine komplette T-Struktur ergibt. Die Klammern bzw. die Schienenstücke sind dann von der offenen Sockel-Schrank-Vorderseite, das T-Profil sichernd, aufschiebbar.

Die Profilquerschnittsfläche kann eine Keilschrägform oder Rundungsradien aufweisen. Auch besteht die Möglichkeit, dass die Querschnittsfläche von der offenen Vorder- zur Schrank- und Sockelrückseite zunimmt, und zwar zum Zweck der Ausbildung einer Konizität mit dem Ergebnis einer selbstsichernden Keilverbindung beim Aufbringen der entsprechenden Schienenstücke bzw. der Klammern.

Die Schienenstücke können im Querschnitt ein C-Profil aufweisen, wobei in diesem Fall die Profilierung von Flansch und Kragung Rundungsradien umfasst, die der lichten Innenfläche des C-Profils entspricht oder ein entsprechendes Übermaß bezogen auf die lichte Weite des Schienenstücks aufweist.

Wie bereits dargelegt, können mindestens die gegenüberliegenden Seitenwände des Aufsatzteils eine Justier-Keilschrägfläche aufweisen, welche gegenüber der Kragung oder dem Flansch in Sockelrichtung vorsteht. Hierdurch wird beim Absetzen des Aufsatzteils auf den Sockel die gewünschte Zentrierung und exakte Lage mit bündigen Außenkanten und entsprechend bündiger Profilierung gewährleistet.

Die am Sockel oder am Aufsatzteil im Bereich der Kragung oder des Flansches vorgesehenen Zentriernasen greifen jeweils in eine komplementäre Bohrung oder Aussparung in die montageseitig gegenüberliegenden Kragung bzw. den Flansch ein.

Schrank und/oder Sockel sind jeweils aus einem einstückigen Kunststoff-Formteil gefertigt, wobei auf einen quasi Standardsockel verschiedene höhenmäßig unterschiedlich ausgebildete Aufsatzteile aufsetz- und fixierbar sind.

Die Klammern oder Schienenstücke bestehen aus einem metallischen Material.

Die Klammern oder Schienenstücke werden vor dem Montieren von Türen oder Frontplatten auf die jeweiligen Profile aufgeschoben. Die Profile sind dabei grundsätzlich so gestaltet, dass jeweils ein am Sockel bzw. am Aufsatzteil vorhandenes Halbprofil zu einem Komplettprofil gestaltet wird, wenn das Aufsatzteil sich auf dem Sockel befindet. Die dann von vorn aufgeschobenen bzw. aufgedrückten Schienenstücke sichern form- und kraftschlüssig das Aufsatzteil gegenüber dem Sockel.

An den Schienenstücken oder den Klammern können Mittel zum leichteren Demontieren vorgesehen sein. Diese Mittel können z.B. einen Rücksprung, eine Aussparung, eine Öse oder dergleichen umfassen, um durch Hammerschlag oder mit einem Ausziehwerkzeug das entsprechende Schienenstück aus seinem Klemmsitz zu lösen.

Die vorstehend erläuterte Verbindung ist selbstsichernd. Zusätzliche Schraubverbindungen können entfallen.

Die Verbindungsstellen selbst sind bevorzugt über die gesamte Tiefe an den Seitenwänden ausgebildet, jedoch flach und wenig Bauraum eingrenzend ausgeführt. Das Einbringen von senkrechten Bauteilen im Aufsatzteil bis hinein in den Sockelbereich reichend ist bei der vorgestellten Verbindungstechnik nicht eingeschränkt.

Die Erfindung soll nachstehend anhand eines Ausführungsbeispiels sowie unter Zuhilfenahme von Figuren näher erläutert werden.

Hierbei zeigen:
- Fig. 1: eine isometrische Ansicht eines Sockelteils und eines Aufsatzteils mit der erfindungsgemäßen Verbindungsanordnung;
- Fig. 2: eine vergrößerte Detailansicht der Verbindung, und zwar im Zustand vor dem Aufsetzen des Schrankoberteils auf den Sockel; und
- Fig. 3: eine Detaildarstellung der kompletten Verbindungsanordnung gemäß Fig. 1.

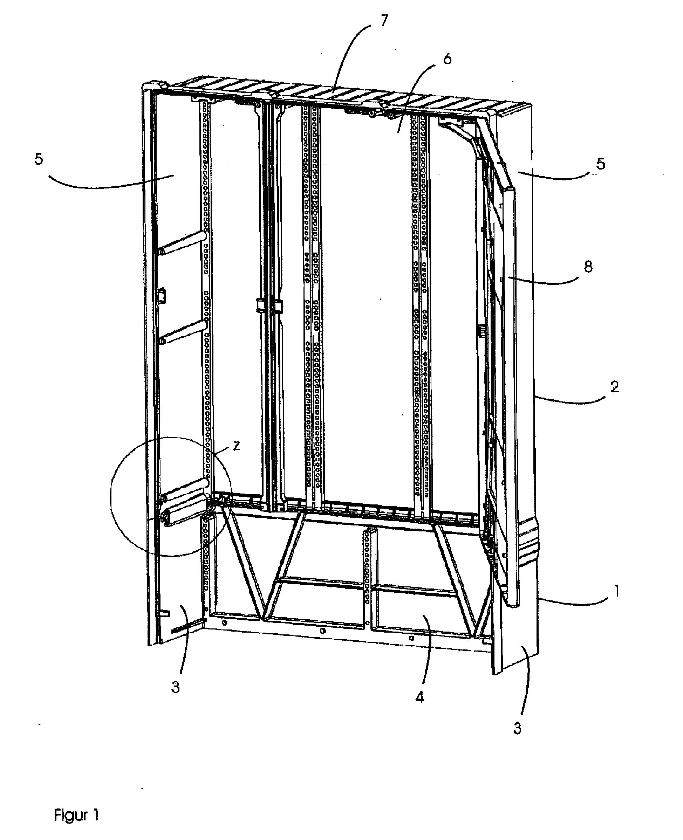

Die im Ausführungsbeispiel anhand der Fig. 1 bis 3 erkennbare Verbindungsanordnung betrifft eine Schrank-Sockel-Verbindung z.B. eines Kabelverteilers oder einer im Freien angeordneten Anschlusssäule, welche üblicherweise aus einem glasfaserverstärkten Polyestermaterial bestehen.

Dabei ist ein Aufsatzteil 2 mit einem Sockel 1 mechanisch fest zu verbinden, wobei im Aufsatzteil 2 bereits verschiedene elektrische Installationsmittel montiert sein können (nicht gezeigt).

Der Sockel 1 weist zwei Seitenwände 3 auf und umfasst eine Rückwand 4. Ebenso besitzt das Aufsatzteil Seitenwände 5, eine Rückwand 6 und ein Dachteil 7. Über eine oder mehrere Türen 8 kann der Schrank verschlossen und vor unbefugtem Zugriff gesichert werden.

Der Sockel 1 ist üblicherweise bereits vor Ort im Erdreich montiert und nimmt Kabelabgänge auf.

Die z.B. elektrischen Schaltmittel sind im Aufsatzteil enthalten und werden entsprechend der gewünschten Funktion verdrahtet.

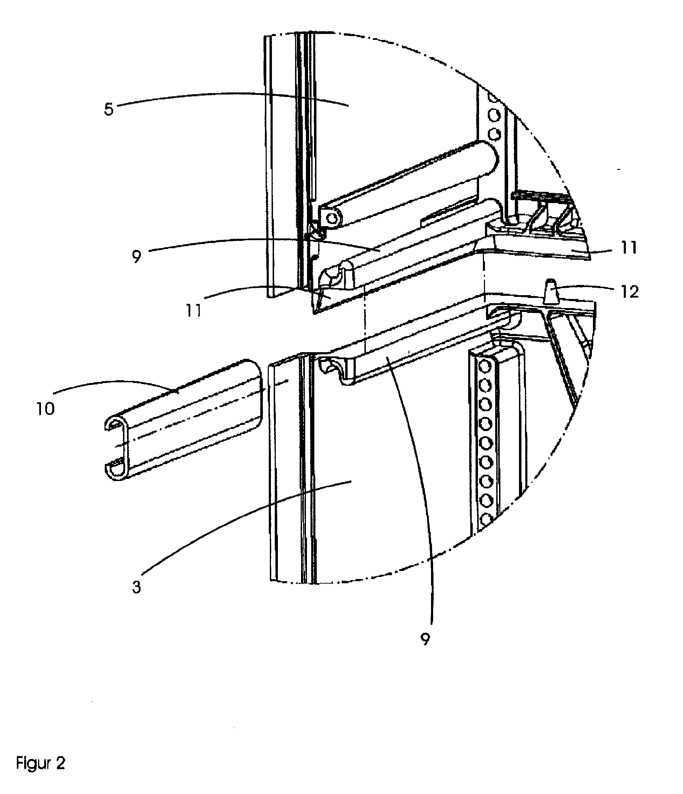

Sockel 1 und Aufsatzteil 2 weisen an ihren montageseitig gegenüberliegenden Flächen einen Flansch oder eine zum Innenraum orientierte Kragung auf (siehe Detail Fig. 2).

Erfindungsgemäß ist der Flansch oder die Kragung profiliert ausgebildet. Eine solche Profilierung weist bevorzugt die Gestalt eines in Längsrichtung geschnittenen hälftigen T 9 auf, wobei sich nach dem Aufsetzen des Schrankteils 2 auf den Sockel 1 eine komplettierte T-Struktur ergibt.

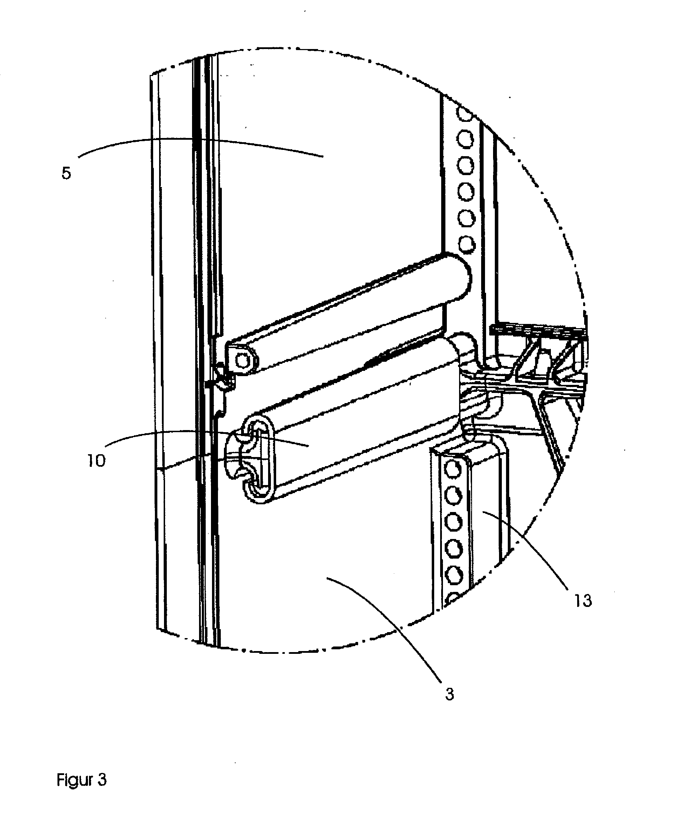

Ein Schienenstück 10 mit einem C-Querschnitt kann dann von der Vorderseite auf die komplette Profilierung der Kragung aufgeschoben werden, wobei sich im Ergebnis ein Form-Kraftschluss gemäß Fig. 3 ergibt.

Die Profilquerschnittsfläche kann gemäß der Darstellung nach Fig. 2 Rundungsradien aufweisen, die der lichten Querschnittsfläche des Schienenstücks 10 mit C-Profil angepasst sind.

Selbstverständlich sind, ohne den Grundgedanken der Erfindung zu verlassen, auch abweichende symmetrisch oder asymmetrisch ausführbare Profilierungen denkbar, wobei die Schenkel der Profilierung auch nicht von gleicher Querschnittsfläche und/oder Schenkellänge sein müssen.

So kann bei einer Ausgestaltung der Erfindung z.B. ein Profil am Sockel als Hohlprofil ausgeführt werden, dessen Hohlraum einen Schenkel einer U-Klammer aufnimmt.

Weiterhin sind erfindungsgemäß die gegenüberliegenden Seitenwände 5 des Aufsatzteils 2 mit einer Justier-Keilschrägfläche 11 versehen.

Diese Juster-Keilschrägfläche 11 kann auch an der Rückwand des Aufsatzteils 2 vorhanden sein.

Weiterhin ist bei der gezeigten Ausführungsform am Sockel 1 im Bereich der Kragung oder des Flansches mindestens eine Zentriernase 12 vorhanden, die in eine komplementäre Bohrung oder Aussparung in der montageseitig gegenüberliegenden Kragung des Aufsatzteils 2 eingreift. Damit ist ein unerwünschtes Verschieben des Aufsatzteils 2 beim Montagevorgang verhindert. Durch die Gestaltung der Zentriernase 12 als Kegel oder Kegelstumpf ergibt sich auch hier eine zentrierende und justierende Wirkung, ohne dass ein nachträgliches Ausrichten des Aufsatzteils 2 bezüglich Sockel notwendig wird.

Insbesondere die Fig. 3 macht deutlich, dass die gesamte Verbindungsanordnung außerordentlich flachbauend ist und kaum in den Innenraum des Aufsatzteils 2 hineinreicht. Konkret ist die Verbindungsanordnung nicht breiter als eine ohnehin notwendige in Längsrichtung verlaufende Befestigungsleiste 13.

## Patentansprüche

1. Verbindungsanordnung für auf einem Sockel positionierte schrankförmige, vorgefertigte modulartige Aufsatzteile, insbesondere Schaltschränke, Niederspannungsverteiler, Kabelverteiler, elektrische Anschlusssäulen oder dergleichen Einrichtungen, wobei der Sockel und das Aufsatzteil an ihren montageseitig gegenüberliegenden Flächen einen Flansch oder eine zum Innenraum orientierte Kragung (9) aufweisen und der Flansch oder die Kragung (9) eine Profilierung aufweist, wobei zur form- und kraftschlüssigen Verbindung zwischen Sockel (1) und Aufsatzteil (2) Klammern oder Schienenstücke (10) vorgesehen sind, welche eine zur Profilierung komplementäre Form besitzen, wobei
die Klammern oder Schienenstücke (10) von der offenen Sockel-Schrank-Vorderseite, die Profilierung sichernd, aufschiebbar und die Verbindungsstellen über die gesamte Tiefe an den Seitenwänden ausgebildet sind, **dadurch gekennzeichnet, dass**
mindestens die gegenüberliegenden Seitenwände (5) des Aufsatzteils (2) eine Justier-Keilschrägfläche (11) aufweisen, welche gegenüber der Kragung oder dem Flansch (9) in Sockelrichtung vorsteht sowie
am Sockel (1) oder am Aufsatzteil (2) im Bereich der Kragung oder des Flansches mindestens eine Zentriernase (12) vorgesehen ist, welche jeweils in eine komplementäre Bohrung oder Aussparung in der montageseitig gegenüberliegenden Kragung oder dem Flansch (9) eingreift.

2. Verbindungsanordnung nach Anspruch 1,
**dadurch gekennzeichnet, dass**
die Profilierung eine Querschnittsfläche in der Gestalt eines in Längsrichtung geschnittenen hälftigen T aufweist, wobei sich nach dem Aufsetzen des Schrankteils (2) auf den Sockel (1) eine komplette T-Struktur ergibt.

3. Verbindungsanordnung nach Anspruch 2,
**dadurch gekennzeichnet, dass**
die Profilquerschnittsfläche eine Keilschrägform oder Rundungsradien aufweist und die Querschnittsfläche von der offenen Vorder- zur Schrank- und Sockelrückseite zunimmt.

4. Verbindungsanordnung nach Anspruch 3,
**dadurch gekennzeichnet, dass**
die Schienenstücke (10) eine C-Profilierung aufweisen.

5. Verbindungsanordnung nach einem der vorangegangenen Ansprüche,
**dadurch gekennzeichnet, dass**
Schrank (2) und Sockel (1) jeweils aus einem einstückigen Kunststoff-Formteil bestehen.

6. Verbindungsanordnung nach Anspruch 5,
**dadurch gekennzeichnet, dass**
in die Kunststoff-Formteile Frontplatten oder Türen einsetzbar sind.

7. Verbindungsanordnung nach einem der vorangegangenen Ansprüche,
**dadurch gekennzeichnet, dass**
die Klammern oder Schienenstücke (10) aus einem metallischen Material bestehen.

8. Verbindungsanordnung nach Anspruch 5,
**dadurch gekennzeichnet, dass**
die Klammern oder Schienenstücke (10) vor dem Montieren der Türen oder Frontplatten (8) auf die jeweilige Profilierung aufgeschoben werden.

9. Verbindungsanordnung nach einem der vorangegangenen Ansprüche,
**dadurch gekennzeichnet, dass**
die Schienenstücke (10) oder Klammern eine konische Form besitzen.

10. Verbindungsanordnung nach einem der vorangegangenen Ansprüche,
**dadurch gekennzeichnet, dass**
an den Schienenstücken (10) oder den Klammern Mittel zum leichteren Demontieren selbiger vorgesehen sind.

11. Verbindungsanordnung nach Anspruch 10,
**dadurch gekennzeichnet, dass**
die Mittel einen Rücksprung, eine Aussparung, eine Öse oder dergleichen umfassen.

12. Verbindungsanordnung nach Anspruch 1,
**dadurch gekennzeichnet, dass**
die Profilierung ausschließlich an den Seitenwänden, die Zentriernasen an der Rückwand und die Justier-Keilschrägflächen sowohl an den Seitenwänden als auch an der Rückwand des Sockels bzw. Aufsatzes ausgebildet sind.

## Claims

1. A connection arrangement for cubicle-like, pre-manufactured modular attachments positioned on a socket, in particular control cabinets, low-voltage distributors, cable distributors, electrical connection columns or similar equipment, wherein the socket and the attachment include a flange or a collar (9) oriented toward the interior at surfaces of the socket and of the attachment disposed opposite to one another in the assembly, and the flange or the collar (9) includes a profile, wherein clamps or rail components (10) are provided that have a complementary shape relative to the profile for providing a form locked and friction locked connection between the socket (1) and the attachment (2), wherein
the clamps or rail components (10) are configured to be slid on from the open socket-cabinet front side, so that they secure the profile, and the connection locations are configured at the sidewalls over the entire depth, **characterized in that**
at least the opposing sidewalls (5) of the attachment (2) include a slanted wedge surface for alignment (11), which protrudes relative to the collar or the flange (9) in a socket direction, and
at least one centering lug (12) is provided at the socket (1) or at the attachment (2) in the portion of the collar or the flange, wherein the centering lug respectively engages a complementary bore hole or recess in the collar or flange (9) that is opposed in the assembly.

2. The connection arrangement according to claim 1,
**characterized in that**
the profile includes a cross sectional surface configured as a half T, cut in a longitudinal direction, wherein placing the cabinet component (2) onto the socket (1) yields a complete T-structure.

3. The connection arrangement according to claim 2,
**characterized in that**
the profile cross sectional surface has a slanted wedge shape or rounding radii and the cross section surface increases from the open front side to the cabinet- and socket backside.

4. The connection arrangement according to claim 3,
**characterized in that**
the rail components (10) have a C-profile.

5. The connection arrangement according to one of the preceding claims,
**characterized in that**
the cabinet (2) and the socket (1) are respectively made from a one-piece molded plastic component.

6. The connection arrangement according to claim 5,
**characterized in that**
front plates or doors are insertable into the molded plastic components.

7. The connection arrangement according to one of the preceding claims,
**characterized in that**
the clamps or rail components (10) are made from a metal material.

8. The connection arrangement according to claim 5,
**characterized in that**
the clamps or rail components (10) are slid onto the respective profiles before mounting the doors or the front plates (8).

9. The connection arrangement according to one of the preceding claims,
**characterized in that**
the rail components (10) or clamps have a conical shape.

10. The connection arrangement according to one of the preceding claims,
**characterized in that**
devices configured to facilitate easy demounting of the rail components (10) or the clamps are provided at the rail components (10) or the clamps.

11. The connection arrangement according to claim 10,
**characterized in that**
the devices include a recess, a cut-out or an eyelet or similar.

12. The connection arrangement according to claim 1,
**characterized in that**
the profile is configured exclusively at the sidewalls, the centering lugs are configured at the back wall, and the slanted wedge surfaces for alignment are configured at the sidewalls and also at the back wall of the socket or attachment.

## Revendications

1. Agencement de connexion pour des éléments rapportés modulaires préfabriqués, en forme d'armoires positionnées sur un socle, en particulier armoires de commutation, distributeurs de basse tension, distributeur de câbles, bornes de raccordement électriques ou systèmes similaires, dans lequel le socle et l'élément rapporté comportent, sur leurs surfaces opposées orientées du côté montage, une bride ou une collerette (9) orientée vers l'espace intérieur, et la bride ou la collerette (9) comporte un profilage et, pour une liaison à coopération de formes et de forces entre le socle (1) et l'élément rapporté (2) il est prévu des pinces ou des morceaux en forme de tringle (10), qui possèdent une forme complémentaire au profilage, dans lequel
les pinces ou les morceaux en forme de tringle (10) sont capables d'être enfilées depuis la face antérieure ouverte socle/armoire, en bloquant le profilage, et les emplacements de liaison sont réalisés sur la totalité de la profondeur sur les parois latérales,
**caractérisé en ce que**
au moins les parois latérales opposées (5) de l'élément rapporté (2) comportent une surface oblique d'ajustement en forme de coin (11), qui dépasse par rapport à la collerette ou à la bride (9) en direction du socle, et
au moins un ergot de centrage (12) est prévu sur le socle (1) ou sur l'élément rapporté (2) dans la région de la collerette de la bride, ergot qui s'engage respectivement dans un perçage ou une échancrure complémentaire dans la collerette ou dans la bride (9) opposée orientée du côté montage.

2. Agencement de connexion selon la revendication 1,
**caractérisé en ce que**
le profilage présente une surface de section transversale sous la configuration d'un T coupé par moitié en direction longitudinale, de sorte qu'après avoir posé la partie d'armoire (2) sur le socle (1) il en résulte une structure en T complète.

3. Agencement de connexion selon la revendication 2,
**caractérisé en ce que**
la surface de section transversale du profilé présente une forme oblique en coin ou des rayons d'arrondi, et la surface de section transversale augmente depuis la face antérieure ouverte vers la face postérieure de l'armoire et du socle.

4. Agencement de connexion selon la revendication 3,
**caractérisé en ce que** les morceaux de tringle (10) présentent un profilage en C.

5. Agencement de connexion selon l'une des revendications précédentes,
**caractérisé en ce que** l'armoire (2) et le socle (1) sont constitués respectivement par une pièce conformée en matière plastique d'une seule pièce.

6. Agencement de connexion selon la revendication 5,
**caractérisé en ce que** des plaques frontales ou des portes sont susceptibles d'être mises en place dans les pièces conformées en matière plastique.

7. Agencement de connexion selon l'une des revendications précédentes,
**caractérisé en ce que** les pinces ou les morceaux de tringle (10) sont en un matériau métallique.

8. Agencement de connexion selon la revendication 5,
**caractérisé en ce que** les pinces ou les morceaux de tringle (10) sont enfilé(e)s sur le profilage respectif avant le montage des portes ou de plaques frontales (5).

9. Agencement de connexion selon l'une des revendications précédentes,
**caractérisé en ce que** les morceaux de tringle (10) ou les pinces possèdent une forme conique.

10. Agencement de connexion selon l'une des revendications précédentes,
**caractérisé en ce qu'**il est prévu sur les morceaux de tringle (10) ou sur les pinces des moyens pour faciliter le démontage de ceux-ci/celles-ci.

11. Agencement de connexion selon la revendication 10,
**caractérisé en ce que** les moyens comprennent un ressaut, une échancrure, un oeillet, ou similaires.

12. Agencement de connexion selon la revendication 1,
**caractérisé en ce que** le profilage est réalisé sur les parois latérales, les ergots de centrage sur la paroi postérieure, et les surfaces obliques d'ajustement en forme de coin sont réalisées aussi bien sur les parois latérales que sur la paroi postérieure du socle ou des éléments rapportés.
